# EUROPEAN PATENT APPLICATION

(11) **EP 2 388 731 A1**
(43) Date of publication of application: **23.11.2011**
(21) Application number: 10305539.8
(22) Date of filing: 20.05.2010
(51) Int. Cl.: G06K 7/00

(54) **Method and system for communicating information originating from a contact-less communicating device and a contact-less communicating device**

(71) Applicant: Gemalto SA, 92190 Meudon (FR)
(72) Inventor: Wu, Wilianto, 92190 Meudon (FR)

(57) **Abstract**

The invention relates to a method for communicating information originating from a contact-less communicating device 18. The contact-less communicating device stores data. A contact-less communicating system 10 comprises a contact-less adaptor device 16, a token 14 and a terminal 12. The contact-less adaptor device comprises an antenna 168 and a chip connected to the antenna. The token is connected to the chip and the terminal.

According to the invention, the contact-less communicating device sends, via a short-range radiofrequency signal 214, to the contact-less communicating system data. The chip receives, through the short-range radiofrequency signal, data. The chip sends to the token the received data 216. The token sends to the terminal the received data 224 and a request for performing an action with the received data. The terminal executes the requested action with the received data.

The invention also relates to a corresponding system.

Moreover, the invention relates to a contact-less communicating device.

## Description

### Field of the invention:

The invention relates, in a general manner, to a method for communicating information originating from a contact-less communicating device.

Within the present description, the adjective "contact-less" used within the expression "contact-less communicating device" means notably that the communicating device communicates via a short range radio-frequency link by using, for example, International Standardization Organization/ International Electrotechnical Commission (or ISO/IEC) 14 443 specifications or the like.

Furthermore, the invention pertains to a contact-less communicating device.

Finally, the invention relates to a system for communicating information originating from a contact-less communicating device.

### State of the art:

A Japanese Patent Laid-Open Publication n°269508/2002 describes a solution in which a Radio Frequency IDentification (or RFID) tag (or object), as a contact-less communicating device, is embedded within a poster for advertising an article or a movie. The RFID tag stores a Uniform Resource Locator (or URL) for addressing a server.

Such a known solution allows providing a user of an Near Field Communication (or NFC) enabled terminal that receives from the RFID tag a short range radiofrequency signal that transports the URL to access an Internet home page of a corresponding server. The terminal user obtains from the server information about the associated advertisement.

However, such a known solution implies that the terminal is equipped with a NFC device, so as to read data from an RFID tag, as a contact-less communicating device. Currently, there are only few handsets, as terminals, that are NFC enabled and therefore expensive.

Thus, there is a need to facilitate access to data stored within a contact-less communicating device.

### Summary of the invention:

The invention proposes a solution for satisfying the just hereinabove specified need by providing a method for communicating information originating from a contact-less communicating device. The contact-less communicating device stores data. A contact-less communicating system comprises a contact-less adaptor device, a token and a terminal. The contact-less adaptor device comprises an antenna and a chip connected to the antenna. The token is connected to the chip and the terminal.

According to the invention, the method comprises the following steps:
- the contact-less communicating device sends, via a short-range radiofrequency signal, to the contact-less communicating system data;
- the chip receives, through the short-range radiofrequency signal, data;
- the chip sends to the token the received data;
- the token sends to the terminal the received data and a request for performing an action with the received data;
- the terminal executes the requested action with the received data.

The principle of the invention consists in using a terminal with a contact-less adaptor device and a token for interacting, on one hand, through the contact-less adaptor device and a short range radio-frequency link, with a contact-less communicating device, as an external entity, that communicates data, and on another hand, with the terminal, so as to retrieve, from the contact-less communicating device, data to be used.

It is to be noted that the data originating from a contact-less communicating device may relate to any kind of application or service, such as an advertisement service, an identification service, a tracking service, a transport service, a wallet service, a bank service, a payment service and/or other service(s).

It is noteworthy that the token is a necessary intermediary entity between the contact-less adaptor device and the terminal, so as to transfer data originating from the contact-less communicating device and the terminal.

Thus, the invention solution makes it possible to exchange, between the contact-less communicating device and the terminal, information.

A user of the invention system, namely a terminal with a contact-less adaptor device and a token, accesses data used to trigger an application supported by the token and that involves an action performed by the terminal.

The use of the invention system allows reading, directly and in live, data from the contact-less communicating device without suffering from any external constraint delaying or slowing down the reading.

The invention solution thus facilitates the access to data stored by the contact-less communicating device and is therefore convenient and user-friendly.

According to a further aspect, the invention is a contact-less communicating device.

According to the invention, the contact-less communicating device is adapted to send, via a short-radio range radiofrequency signal, data.

The contact-less communicating device may be an RFID tag or a contact-less reader, as an active and/or passive entity.

According to a further aspect, the invention is a contact-less system for communicating information originating from a contact-less communicating device. The contact-less communicating device stores data. The contact-less communicating system comprises a contact-less adaptor device, a token and a terminal. The contact-less adaptor device comprises an antenna and a chip connected to the antenna. The token is connected to the chip and the terminal.

According to the invention, the chip comprises means for receiving, via a short-range radiofrequency signal, data and means for sending to the token the received data. The token comprises means for sending to the terminal the received data and a request for performing an action with the received data. The terminal comprises means for executing the requested action with the received data.

Such an invention system may be constituted by an original contact-less compatible terminal, i.e. a terminal connected to a token and a contact-less adaptor device.

As terminal, it can be any device including means for processing data, means for sending to and/or receiving data from outside through an interface with a token, comprising or being connected to means for interfacing with a user, such as a loudspeaker and/or a display screen, and comprising or being connected to means for storing data.

For example, the terminal may be a mobile telephone, a smart telephone, a Personal Digital Assistant (or PDA), a Personal Computer (or PC), a mobile laptop, a portable TeleVision (or TV) and/or a netbook.

As token, it can be any electronic device comprising means for processing data, means for sending to and/or receiving data from outside through an interface with a terminal and through an interface with a contact-less adaptor device, comprising or being connected to means for interfacing with a user, such as a loudspeaker and/or a display screen, and comprising or being connected to means for storing data.

The token is any electronic medium that may have different form factors. The token can constitute any electronic medium.

For example, the token can be embodied within a smart card, a Secure Digital (or SD) type card, a Multi-Media (or MMC) type Card, a smart dongle of the USB (acronym for "Universal Serial Bus") type, or a chip to be fixed to a user terminal, as host device, possibly in a removable manner.

### Brief description of the drawings:

Additional features and advantages of the invention will be more clearly understandable after reading a detailed description of one preferred embodiment of the invention, given as one indicative and non-limitative example, in conjunction with the following drawings:

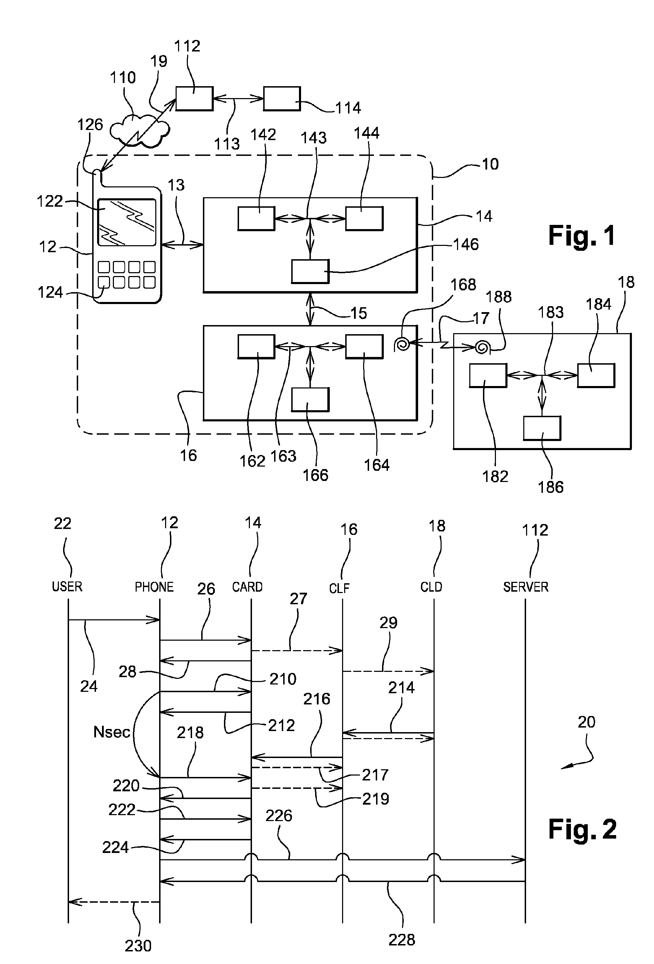

- Figure 1 represents a simplified diagram of one exemplary embodiment of a contact-less system for communicating information originating from a contact-less communicating device, the system comprising a contact-less adaptor device, a smart card, as token, and a mobile telephone, as terminal, the system being adapted to receive, from the contact-less communicating device, data to be interpreted, at least in part, by the token; and
- Figure 2 represents an example of one message flow notably between a user, the terminal, the token, the contact-less adaptor device and the contact-less communicating device of figure 1, so as to let the terminal execute an action(s) by using data originating from the contact-less communicating device.

### Detailed description:

Herein under is considered a case in which the invention method for communicating information originating from a contact-less communicating device is implemented by a Universal Integrated Circuit Card (or UICC) type smart card in cooperation with one NFC chip connected to an antenna under the NFC chip control and housed within a handset, as a (user) terminal, so as to receive data originating from a contact-less communicating device, through a short-range radiofrequency link, and transfer the received data, at least in part, through or to the terminal.

However, the invention method for communicating information originating from a contact-less communicating device may be implemented by a USB dongle, as token, in cooperation with one NFC chip connected to an antenna under the NFC chip control and housed within a PC, as a (user) terminal, that may be connected to a fixed (such as Internet) and/or mobile communication network(s).

Figure 1 shows one embodiment of an electronic system 10 for communicating data originating from a Contact-Less communicating Device 18, as an external entity (with respect to the system 10).

The system 10 for communicating data comprises a mobile NFC telephone 12, as a terminal, a UICC type smart card 14, as a token, and a Contact-Less Front-end 16, as a contact-less adaptor device.

For the sake of clarity and conciseness, the mobile NFC telephone 12, the UICC type smart card 14, the Contact-Less Front-end 16 and the Contact-Less communicating Device 18 are termed hereinafter the phone 12, the card 14, the CLF 16 and the CLD 18 respectively.

As to the terminal, instead of being constituted by a phone, the terminal may be, for example, a PC, a desktop computer, a laptop computer, a set top box, a netbook and/or a PDA.

As to the token, instead of being constituted by a card, the token may be a contact-less smart dongle of the USB type, or a chip to be fixed to a user terminal possibly in a removable manner.

The CLD 18 includes a passive entity (i.e. with no battery and powered by an external interrogating signal to provoke a short range radiofrequency signal transmission), like an RFID tag, an active entity (i.e. with a battery for being autonomously powered to provoke a short range radiofrequency signal transmission), such as an RFID reader, and a semi-passive tag, for example, a battery assisted passive RFID tag needing an external interrogating signal to wake up and adding power with a battery to provoke a short range radiofrequency signal transmission.

A passive tag, as CLD 18, may be compliant with ISO 15 693 standard that needs an external interrogating signal of 0,15 A/m, so as to be powered.

When constituted by a passive entity, the CLD 18 is adapted to send to a reader data stored within the CLD 18 as soon as the reader interrogates the CLD 18 by receiving an external interrogation short range radiofrequency signal that powers the CLD 18.

When constituted by an active entity, the CLD 18 is adapted to send to an external targeted device data stored within the CLD 18 as soon as the CLD 18 detects the presence of the external targeted device by sending an interrogation short range radiofrequency signal that may power the external targeted device. According to another embodiment, instead of detecting a presence of an external targeted device, the active entity, as CLD 18, is arranged to send, periodically, with a time period that is configurable, for example, a time period value is 100 ms.

The CLD 18 includes a chip for storing and processing data, modulating (and possibly demodulating) a short range radio-frequency signal and an antenna 188 for transmitting (and possibly receiving) the short range radio-frequency signal. The CLD 18 chip is connected to the antenna 188.

The CLD 18 chip preferably includes at least one microprocessor 182, as data processing means, at least one memory 184, and at least one Input/Output (or I/O) interface 186 which are internally linked together through a data and control bus 183.

The CLD memory 184 stores data to be provided to the CLF 16.

Alternately, the CLD (not represented) includes at least one memory and at least one I/O interface, i.e. without processing capabilities.

The CLD 18 incorporates an antenna 188 that is configured, so as to exchange (preferably at least send), through a short-range radiofrequency link 17, with an external entity, namely the system 10 (and more exactly the CLF 16), data transported by a short-range radiofrequency signal.

The short range radiofrequency is fixed at, for example, 13.56 MHz.

The contact-less communication with the CLD 18 is preferably compatible with the ISO 14 443 standard.

The CLF (or NFC) 16 is preferably constituted by an element that has been added on at least one phone 12 component, by fixing it to a phone component(s), for example, by sticking the add-on CLF 16 on a phone 12 body part, rendering thus the phone NFC capable (i.e. allowing the phone 12 to benefit from a NFC service(s)).

One appropriate add-on CLF 16 is described within an international Patent application filed on July 31 2009, that is herein incorporated, the filing number of which is PCT/CN2009/000858 and the title of which is "Contact-less adaptor device".

Alternatively, the CLF 16 is inserted within the phone 12, before the phone issuing, as an original NFC (or contact-less) compatible phone.

The CLF 16 includes a chip, an antenna 168 and a connector of a smart card type. The connector is preferably compatible with the ISO 7816 standard.

The CLF 16 chip is connected to the antenna 168 and the connector.

The antenna 168 is arranged to communicate, through a short range radio-frequency link 17, notably with the CLD 18 that is external to the phone 12 that accommodates or is connected to the card 14 and the CLF 16.

The CLF 16 chip plays a role of a modulator-demodulator (or modem) for the card 14, i.e. a device that may:
- modulate an analogical carrier signal to encode digital information received from the card 14 to be transmitted, over the antenna 168, to the CLD 18, and/or
- demodulate a received analogical carrier signal to decode the encoded digital information that is received, over the antenna 168, from the CLD 18.

The CLF 16 chip may be used either in a reader mode, so as to let communicate the card 14 and the CLD 18 while powering, at least in part, the CLD 18, or in a contact-less card emulation mode (or transponder mode), so as to wait for data originating from the CLD 18.

In a reader mode, the CLF chip 16 is powered either directly or indirectly (i.e. through the phone 12 microprocessor and the card 14 microprocessor) by a battery housed within the phone 12 and transmits, through the antenna 168, a signal with sufficient power, so as to also power the CLD 18. Thus, the CLD 18 may perform tasks or operations requested from or through the card 14, among which a transmission of data stored within the CLD 18.

In a preferred embodiment, the CLF 16 chip is arranged notably to translate one contact-less message originating from the CLD 18 into a message of the Single Wire Protocol (or SWP) type according to ETSI SWP 102 613, and possibly, conversely, i.e. to translate a SWP type message into a contact-less message to the CLD 18.

The CLF 16 chip preferably includes at least one microprocessor 162, as data processing means, at least one memory 164, and at least one Input/Output (or I/O) interface 166 which are internally linked together through a data and control bus 163.

The CLF 16 incorporates the antenna 168 that is configured, so as to exchange (at least receive), through the short-range radiofrequency link 17, from an external entity, namely the CLD 18, data transported by a short-range radiofrequency signal.

The card 14 is connected, through a single wire 15, i.e. one of the eight contacts of the ISO 7816 interface, to the CLF 16 chip.

The card 14, as token, is connected, through another contact link 13, to the phone 12, as host device.

The card 14 cooperates with, on the one hand, the CLF 16, and on the other hand, the phone 12.

According to the invention, the card 14 is adapted to come in between the CLF 16 and the phone 12, so as to capture, through the CLF 16, data originating from the CLD 18, interpret, at least in part, the captured data and launch an execution of an appropriate action performed by the phone 12.

The card 14 includes a microprocessor 142, as means for processing data, at least one memory 144 for storing data, and at least one I/O interface 146 which are all linked together through a control and data bus 143.

The card microprocessor 142 preferably executes security functions, in order to protect an access to information managed through or by the card 14. Among others, the security functions allows to identify a user of the card 14 and/or encrypt data to be sent, in order to be read only by a communication device, such as a remote (Web) server 112 (described further infra), that shares with the card 14 a key enabling to decrypt the sent encrypted data (and thus obtain clear data).

The security functions include preferably a user authentication process to be used before accessing the card 14 and/or the remote server 112. To authenticate the user, the card 14 may store an application for verifying a Personal Identity Number (or PIN) securely stored by the card 14 and to be input by the card 14 user, so as to compare the input data with the stored PIN, so as to authorize the running of the application algorithm.

The security functions include preferentially an encryption/decryption process to be used before sending, to an external communication device, like the remote server 112, data, as command, and/or after receiving from the external communication device, data, as response to the sent command, so as to protect an access to the data exchanged between the card 14 and the remote server 112.

The card 14 preferably stores securely, within its memory 144, an International Mobile Subscriber Identity (or IMSI) relating to the mobile phone user, as a unique number associated with all Global Service for Mobiles (or GSM), Universal Mobile Telecommunications System (or UMTS), Code Division Multiple Access (or CDMA) and/or Long Term Evolution (or LTE) type network(s) 110. The mobile radio-communication network list is not exhaustive but only for exemplifying purposes and is not considered to reduce the scope of the present invention.

The IMSI is used to identify a subscriber in relation to one or several mobile radio-communication networks.

The card 14 can store, within its memory 144, for example, a SIM application for a GSM network, a Universal Subscriber Identity Module (or USIM) for a UMTS network, a CDMA Subscriber Identity module (or CSIM) for a CDMA network, a Removable User Identity Module (or RUIM) for GSM, UMTS and CDMA networks, and/or an Internet protocol multimedia Services Identity Module (or ISIM) for IP Multimedia Subsystem (or IMS).

Naturally, the just aforementioned list is not exhaustive but only for exemplifying purposes and is not considered to reduce the scope of the present invention.

The card 14 stores, preferably within a non-volatile part of the memory 144, an application algorithm relating to a process, according to the invention, for communicating data originating from the CLD 18.

The card user preferably accesses this application and triggers its execution, through a SIM application ToolKit (or STK) like menu or a local (Web) server that is embedded within the card 14 and lists all the applications supported by the card 14.

To access this application, the card user uses preferentially a man machine interface relating to the phone 12.

According to another embodiment, the access to this application and the triggering of its execution is automatically launched when powering on the phone 12 and, through the contact link 13, the card 14.

The card 14 is used in a reader mode.

The card 14 is able to initiate actions with data provided, at least in part, through the CLF 16 chip, by the CLD 18, in order to interact directly with the outside world, in an independent manner of the phone 12, as host device, and possibly (i.e. when involved) the mobile radio-communication network. Such a capacity of interaction at the initiative of the card 14 is also known as proactive capacity.

The card 14 is able to send, at its own initiative, to the phone 12, as a request for performing an action with the data received, through the CLF 16 chip, from the CLD 18:
- a proactive command for launching a (Web) browser to access a remote (Web) server 112 that is identified, at least in part, by the data received from the CLD 18;
- a proactive command for displaying, through the display screen 122 of the phone 12, a text message, also known as "Display text", comprising, at least in part, data received from the CLD 18;
- a proactive command for sending to another handset (not represented) or a remote server 112, as a communication device, that is identified, at least in part, by the data received from the CLD 18, a Short Message Service (or SMS) message;
- a proactive command for setting up a phone call with another handset (not represented), as a communication device, that is identified, at least in part, by the data received, at least in part, from the CLD 18;
- a proactive command for generating an audio signal, like a sound of one or several beeps, based upon data received, at least in part, from the CLD 18; and/or
- a proactive command for requesting a user input, through the phone 12 man machine interface.

The I/O interface 146 of the card 14 is preferably connected, through a single wire 15, i.e. one of the eight contacts of the ISO 7816 interface, to the CLF 16 chip, by implementing a SWP, to exchange data between the card 14 and the CLF 16 chip.

The card microprocessor 142 executes notably the application algorithm, so as to access data stored within the CLD 18, i.e. receive, through the antenna 168 controlled by the CLF 16 chip, data sent by the CLD 18, interpret the read data and initiate one or several actions requested to be performed through or by the phone 12.

As data sent by the CLD 18, it may include one or several command(s), as executable data.

As command(s), the CLD 18 may send to the CLF 16 chip:
- a command for selecting an application supported by the card 14, namely the concerned application algorithm; and/or
- a command for transferring non-executable data that is also sent to the CLF 16 chip and accompanies the sent command(s).

The CLF 16 chip forwards to the card 14 the received data including the possible executable data or command(s).

The card 14 includes preferably an ISO 7816 interface, so as to let communicate, through a contact link 13, the card 14 and the phone 12.

The communication between the card 14 and the phone 12, as handset, is used in particular to benefit from the man machine interface of the phone 12 and possibly an access to the mobile radio-communication network(s) 110 to which the phone 12 may be connected.

The phone 12 includes at least one battery (not represented), at least one microprocessor (not represented), at least one memory (not represented) and at least one I/O interface.

The phone I/O interface includes an interface, so as to exchange data with the card 14.

The interface with the card 14 is preferably an ISO 7816 interface, as a contact interface when the card 14 is lodged within the phone 12.

The phone I/O interface comprises preferably a display screen 122, a keyboard 124, and an antenna 126.

The display screen 122 and the keyboard 124 may be used for exchanging information between a phone user and the phone 12 or another entity(ies), like the card 14 and/or a remote server 112, which the phone 12 is connected (possibly through the mobile communication network(s) 110) to.

The antenna 126 is used for exchanging, through a long-range wireless link 19 and the mobile radio-communication network 110, information with the remote server 112.

The microprocessor of the phone 12 may be connected to the CLF chip, for example, through an Host Controller Interface (or HCI).

The phone memory stores data, like user data, and at least one application. As application(s), there is preferably at least a Web browser, so as to access, through a local Web server embedded within the card 14 and/or the remote server 112, at least one application supported by the card 14 and/or the remote server 112.

The phone microprocessor processes data originating from the phone memory.

The phone microprocessor is arranged to execute one or several actions requested by the card 14, through, for example, STK command(s).

The phone microprocessor executes preferably the Web browser, as user interface, so as to interact with the application(s) supported through or by the card 14 and offered to the phone user.

The phone 12 is preferably arranged to connect, through the mobile radio-communication network 110, to the remote server 112, thanks to data provided by the card 14, for example, the IMSI and a URL relating to the remote server 112.

The mobile radio-communication network 110 may be connected to an Internet network.

In another embodiment, the mobile radio-communication network is replaced by a (fixed) communication network, such as Internet or Intranet.

The remote server 112 is connected, preferably through a wire link 113, to a memory 114 storing a database, such as advertising data, through a Web page(s), like an HyperText Markup Language (or HTML) page(s), to be downloaded to the phone 12, as (user) terminal.

The remote server 112 is hosted by a computer and is dedicated to running an application for managing the database and communicating some information of the database to outside.

The remote server 112 may manage a plurality of user accounts. The database associates each user account identifier with other data relating to the concerned user account, like a current value of the user account.

The remote server 112 may be operated by either a mobile radio-communication network operator or on its behalf, and/or a service provider or on its behalf, like a bank operator. As service provider, it may be a company, as an advertising operator that provides advertising, a transport operator that manages a transport service, like a bus, a train, a plane, and/or a wallet service.

Figure 2 depicts an example of a message flow 20 that involves a card user 22, the phone 12, the card 14, the CLF 16, the CLD 18 and the remote server 112.

It is assumed that the user 22 owns the card 14 and has switched on the phone 12. The user moves the phone 12 in a close vicinity (up to 20 cm) to a poster which the CLD 18 is attached to. The CLD 18 stores within its memory 184 data that is specific to the poster, like a poster location index, a URL pointing to a remote server providing with a bus schedule, or an advertising displayed by the poster. The data may further contain additional information, such as a time stamp, a terminal Identifier and/or other data.

It is further assumed that the CLF 16 is used in a contact-less card emulation mode and the CLD 18 is an NFC reader.

It is assumed that the display screen 122 of the phone 12 displays a list of application(s) offered from or through the card 14, among which there is(are) the application algorithm relating to a process, according to the invention, for communicating data originating from the CLD 18.

In a preferred embodiment, the user accesses this application and triggers its execution, through a STK like menu or a local Web server originating from the card 14 or the like.

According to another embodiment, as soon as the phone 12 and therefore the card 14 are powered on, the user accesses this application and triggers its execution during a command sent from the phone 12 to the card 14, like "Terminal profile" by which the phone 12 informs the card 14 about notably its own STK capacity (i.e. the STK command(s) that the phone 12 supports).

Firstly, the user 22 selects 24, through the display screen 122 and the keyboard 124 of the phone 12, the application, according to the invention, for communicating data originating from the CLD 18, for example, by depressing a button(s) of the phone keyboard 124.

The phone 12 (and more exactly its microprocessor) detects that the selected application is supported by the card 14.

It is assumed that the phone 12 and the card 14 exchange STK commands and responses that have been standardized notably in ETSI Technical Specifications 102.223.

According to an alternative, instead of STK commands and responses, the phone 12 and the card 14 are adapted to exchange messages relating to Java Specification Request (or JSR) 177 or the like.

The phone 12 addresses to the card 14 (and more exactly its microprocessor) a corresponding command 26 for selecting the concerned application chosen by the user 22, like "select menu item" in which the item relates to the concerned application.

The card 14 is used so as to behave in a reader mode.

The card 14 triggers an execution (by the card microprocessor 142) of the selected application.

Optionally, the card 14 checks whether the user 22 is the true user, for example, by verifying that a PIN entered by the user 22 matches the PIN stored within the card 14, in order to authenticate the user 22 before accessing data managed at the CLD 18 and/or the remote server 112.

Then, the card 14 sends to the phone 12 (and more exactly its microprocessor) a command 28 for setting a poll interval value, like "POLL INTERVAL" with one parameter called duration for requesting a polling, by which, at an expiration of each set poll interval value, the phone 12 sends to the card 14 a command for requesting whether the card 14 has data to be provided to the phone 12.

In order to have a good user experience, the poll interval value shall be small enough but not too small to avoid a "bombing" effect at the card 14 creating thus a deny of service.

The poll interval value may be comprised, for example, within a value range of around 1 to around 5 sec (seconds).

Once the command 28 has been interpreted by the phone 12, the phone 12 sends to the card 14, every set poll interval value, a command 210 relating to the proactive polling, like "STATUS", for requesting whether the card 14 has data to be provided to the phone 12.

It is assumed that, at the time the card 14 receives the last command 210, the card 14 does not have received any data originating from the CLD 18.

Then, the card 14 sends to the phone 12, as response to the last command 210, a response 212 by which the card 14 indicates that the card 14 has no data to be provided to the phone 12, like "9000".

It is noteworthy that, as soon as the card 14 is provided with data received from the CLD 18, the card 18 supplies immediately the phone 12 with such received data.

The RFID reader, as CLD 18, sends, to the CLF 16, a short range radiofrequency signal transporting a message 214 comprising non-executable data and/or executable data.

As data, the RFID reader sends, to the CLF 16, for example, the following Application Protocol Data Unit (or APDU):
- "A0 01 0203 02 0001 ".

As known per se, the APDU format is the following: a first byte relates to a class, a second byte relates to an instruction or command, a third byte relates to a first parameter relating to the instruction, a fourth byte relates to a second parameter relating to the instruction, a fifth byte relates to a data length in a number of bytes of data, and a sixth byte relates to data value.

Thus, the data comprised within this APDU contains a command, namely "01" that is to be interpreted by the card 14 and that relates to a command for requesting to use the appended data. The command is a command, for example, for requesting to launch a Web browser, like "LAUNCH BROWSER", to be sent by the card 14 to the phone 12, while using, for an URL to be built, the attached data value, namely "0001", to append it, as an index to a predetermined Web site address. The predetermined Web site address is stored within the card memory 144. The card 14 (and more exactly the concerned application) should request to the phone 12 a launching of a Web browser with an URL to access a corresponding remote server, by defining a complete URL while using the predetermined Web site address and the data value issued by the CLD 18, as an extension:

For example, "http://www.abc.com/handler?locationld=XX" where "htt://www.abc.com/handler?locationld=" is a predetermined Web site address stored within the card 14 and "XX" is a value provided by the CLD 18.

According to such a scenario, the remote server corresponding to the predetermined Web site address will re-direct to another remote server relating to a complete Web site address corresponding to the one with the data value "XX" provided by the CLD 18.

According to another scenario, the RFID reader sends a different APDU, as follows:
- "A0 01 0203 02 <ASCII codes of a complete URL>".

Thus, the data comprised within this APDU contains a command, namely "01" that is to be interpreted by the card 14, and that relates to a command for requesting to use the appended data. The command is a command, for example, for requesting to launch a Web browser, like "LAUNCH BROWSER", to be sent by the card 14 to the phone 12, while using, for a complete URL, the attached data value, namely "ASCII codes of a complete URL". The card 14 (and more exactly the concerned application) should request to the phone 12 a launching of a Web browser with an URL to access a corresponding remote server, by using the complete URL issued by the CLD 18. According to such another scenario, the remote server (to be addressed) relating to a complete Web site address is directly the right one, i.e. there is no predetermined partial Web site address and no redirection by another remote or local server.

Optionally, the APDU is preceded by another APDU (not represented), possibly with an acknowledgment sent by the CLF 16 to the CLD 18, so as to acknowledge a receipt of the previous APDU by the CLF 16.

As data for the previous APDU, the RFID reader sends, to the CLF 16, for example, the following APDU:
- "00 A4 0400 0A A0000030112233445566".

The data comprised within this previous APDU contains a command, namely "04" that is to be interpreted by the card 14 and that relates to a command for requesting to select, among a plurality of applications, one application that is supported by the card 14 and identified by the appended data value "A0000030112233445566".

Once the CLF 16 has received from the CLD 18 the message 214 including the data, the CLF 16 may send to the CLD 18 an acknowledgement 215 (represented in a dotted line), so as to inform this latter that the CLF 16 has effectively received the message 214 including the data that the CLD 18 has just supplied.

When the CLF 16 has received (after demodulation) from the CLD 18 the message 214 including the data, the CLF 16 sends to the card 14 a message 216 with the received data including non-executable data and/or executable data.

Once the card 14 has received from the CLF 16 the last message 216 including the received data, the card 14 may send to the CLF 16 an acknowledgement 217 (represented in a dotted line), so as to inform this latter that the card 14 has effectively received the message 216 including the data that the CLF 16 has just supplied.

Thus, the card 14 is provided with data originating from the CLD 18 that is therefore available. The card 14 (and more exactly the concerned application) interprets the received data and determines which possible action(s) to be performed is(are) to be requested to the phone 12. The card 14 retrieves the action(s) to be performed and the corresponding received data to be used that may be completed by further data stored within the card memory 144.

Once a time period value has elapsed since the transmission of the previous command 210 relating to the proactive polling, like "STATUS", for requesting whether the card 14 has data to be provided to the phone 12, the phone 12 sends, once again, to the card 14, a command 218 relating to the proactive polling, like "STATUS", for requesting whether the card 14 has data to be provided to the phone 12.

Then, the card 14 sends to the phone 12, as response to the last command 218, a response 220 by which the card 14 indicates that the card 14 has a specified amount of data to be provided to the phone 12, like "91YY" where each digit of "YY" is a hexadecimal code that indicates a length value of data to be fetched by the phone 12.

The phone 12 being thus informed about the availability of data to be fetched, the phone 12 sends to the card 14 a command 222 for requesting the specified amount of data to be provided to the phone 12, like "FETCH YY".

Once the card 14 is requested to provide the phone 12 with the specified amount of data, the card 14 (and more exactly its microprocessor) sends to the phone 12 a corresponding response message 224 including a request for performing one action(s) by using the supplied data, like "LAUNCH BROWSER http://www.abc.com/handler?locationld=XX". The card 14 is thus able to propagate the data received from the CLD 18, through the CLF 16, to the phone 12.

The phone 12 executes the action(s) requested from the card 14 by using the data read from the CLD 18. For example, the phone 12 launches its Web browser and connects to the corresponding remote Web server 112 by sending a HyperText Transfer Protocol (or HTTP) type request 226 for downloading a Web page.

The remote server 112 sends back to the phone 12 a requested Web page 228.

Optionally, the phone 12 informs the user 22 that the action(s) has(have) been successfully performed by possibly sending to the user a message 230 (represented in a dotted line), like "the downloaded page" or "transaction successfully completed", that is, for example, displayed at the display screen 122.

Optionally, a time-out is set to go back to a default poll interval value state, which is, for example, 30 sec. Thus, once the time-out has expired since a change of the default poll interval value state to an inferior set poll interval value state, for example within a value range of around 1 to around 5 sec, the phone 12 goes back to a default poll interval value state without a message originating from the card 14. In such a default poll interval value state, there are less messages that are exchanged between the phone 12 and the card 14 to fetch data than in an inferior set poll interval value state, then there is less power that is consumed by the phone 12 and the card 14.

The use of the card 14 facilitates an interaction with the CLD 18 that stores data to be provided to outside, by driving the data, through the CLF 16, to the phone 12, possibly a remote server 112, and possibly a phone user.

Such a use of the card 14 is easy and therefore convenient for the user 22, since the user 22 may use it anywhere and at anytime for a direct access and in a real time to data supplied by a CLD 18 and passed to the phone 12.

A lot of amendments of the embodiment described supra may be brought without departing from the invention spirit. For example, instead of a use of the CLF 16 in a contact-less card emulation mode and an NFC reader, as CLD 18, the CLF 16 is used in a reader mode and an RFID tag is used as CLD 18. To adapt the message flow 20 to such an embodiment, the card 14 sends to the CLF 16 a message 27 (represented in a dotted line) for requesting to start a reader mode, like "EVT-READER-REQUESTED" specified in ETSI TS 102.622. Then, the CLF 16 sends to the RFID tag an interrogating short range radiofrequency signal 29 (represented in a dotted line) supplying the RFID tag with enough energy to properly power the RFID tag. The RFID tag sends back to the CLF 16, via a short range radiofrequency signal 214, the stored data. Once the card 14 has obtained the data read, through the CLF 16, from the RFID tag by the message 216 including the read data, the card 14 sends to the CLF 16 a message 219 (represented in a dotted line) for requesting to stop a reader mode, like "EVT-END-OPERATION" specified in ETSI TS 102.622.

## Claims

1. A method for communicating information originating from a contact-less communicating device (18), the contact-less communicating device storing data, a contact-less communicating system (10) comprising a contact-less adaptor device (16), a token (14) and a terminal (12), the contact-less adaptor device comprising an antenna (168) and a chip connected to the antenna, the token being connected to the chip and the terminal,
**characterized in that** the method comprises the following steps:
- the contact-less communicating device sends, via a short-range radiofrequency signal (214), to the contact-less communicating system data;
- the chip receives, through the short-range radiofrequency signal, data;
- the chip sends to the token the received data (216);
- the token sends to the terminal the received data (224) and a request for performing an action with the received data;
- the terminal executes the requested action with the received data.

2. Method according to claim 1, wherein, before the token sends to the terminal the received data and a request for performing an action with the received data, the token sends to the terminal a command (28) for setting a poll interval value, by which, at an expiration of each set poll interval value, the terminal sends to the token a command (210) for requesting the token whether the token does have or does not have data to be provided to the terminal.

3. Method according to claim 1 or 2, wherein, before the token sends to the terminal the received data and a request for performing an action with the received data, the token sends to the terminal one response (220) by which the token indicates that the token has an amount of data to be provided to the terminal, the amount of data being specified within the response.

4. Method according to any of claims 1 to 3, wherein, before the token sends to the terminal the received data and a request for performing an action with the received data, the terminal sends to the token a command (222) for requesting data to be provided to the terminal.

5. Method according to any of claims 1 to 4, wherein the token sends to the terminal one and the same message (224) comprising the received data and a request for performing an action with the received data.

6. Method according to any of claims 1 to 5, wherein the token and the terminal exchange data by using Subscriber identity module ToolKit commands and responses.

7. Method according to any of claims 1 to 6, wherein the requested action comprises at least one element of a group including:
- to launch a Web browser to access a Web server, the Web server being identified, at least in part, by the received data;
- to send a Short Message Service message to a communication device, the communication device being identified, at least in part, by the received data;
- to set-up a phone call with a communication device, the communication device being identified, at least in part, by the received data;
- to display a text message comprising, at least in part, the received data; and/or
- to generate and emit an audio signal based upon, at least in part, the received data.

8. A contact-less communicating device (18),
**characterized in that** the contact-less communicating device is adapted to send, via a short-radio range radiofrequency signal (214), data.

9. Device according to claim 8, wherein the contact-less communicating device includes a contact-less reader.

10. A contact-less system (10) for communicating information originating from a contact-less communicating device (18), the contact-less communicating device storing data, the contact-less communicating system comprising a contact-less adaptor device (16), a token (14) and a terminal (12), the contact-less adaptor device comprising an antenna (168) and a chip connected to the antenna, the token being connected to the chip and the terminal,
**characterized in that**:
- the chip comprises means (162, 163, 164, 166) for receiving, via a short-range radiofrequency signal, data;
- the chip comprises means (162, 163, 164, 166) for sending to the token the received data;
- the token comprises means (142, 143, 144, 146) for sending to the terminal the received data and a request for performing an action with the received data;
- the terminal comprises means for executing the requested action with the received data.
